# EUROPÄISCHE PATENTSCHRIFT

(11) **EP 3 374 602 B1**
(45) Veröffentlichungstag und Bekanntmachung des Hinweises auf die Patenterteilung: **20.05.2020**
(21) Anmeldenummer: 16790406.9
(22) Anmeldetag: 04.11.2016
(51) Int. Cl.: F01D 25/16, F01D 25/18, F02C 6/12

(54) **VORRICHTUNG ZUR ABDICHTUNG EINES LAGERGEHÄUSES UND ABGASTURBOLADER MIT EINER SOLCHEN VORRICHTUNG**
ARRANGEMENT FOR SEALING A BEARING CASING AND EXHAUST GAS TURBOCHARGER COMPRISING SUCH ARRANGEMENT
AGENCEMENT D'ÉTANCHEMENT D'UN CARTER DE PALIER ET TURBOCOMPRESSEUR AYANT UN TEL AGENCEMENT

(30) Priorität: 13.11.2015 DE 102015119602
(43) Veröffentlichungstag der Anmeldung: 19.09.2018
(73) Patentinhaber: ABB Turbo Systems AG, 5400 Baden (CH)
(72) Erfinder: VACCA, Andrea, 4805 Brittnau (CH); SCHMID, Andreas, 77793 Gutach (DE); RECHIN, Thomas, 5400 Baden (CH)
(74) Vertreter: Zimmermann & Partner Patentanwälte mbB
(86) Internationale Anmeldenummer: PCT/EP2016/076688
(87) Internationale Veröffentlichungsnummer: WO 2017/080924

(56) Entgegenhaltungen:
- WO-A1-2013/145078
- WO-A1-2014/014791
- DE-A1- 19 713 415

## Beschreibung

### Technisches Gebiet

Die Erfindung bezieht sich auf das Gebiet von Abgasturboladern.

Sie betrifft eine Vorrichtung zum Abdichten eines Schmieröl aufnehmenden Lagergehäuses eines Abgasturboladers sowie einen Abgasturbolader mit einer solchen Vorrichtung.

Ein Abgasturbolader nutzt die Verbrennungsgase eines Verbrennungsmotors um die dem Verbrennungsmotor zuzuführende Verbrennungsluft zu verdichten. Durch die erreichte Vorverdichtung bzw. Aufladung der Verbrennungsluft lassen sich die Füllmenge und damit auch das Kraftstoffgemisch in den Zylindern des Motors erhöhen. Infolgedessen kann eine deutliche Steigerung der Motorleistung erzielt werden. Der in diesem Zusammenhang eingesetzte Abgasturbolader setzt sich standardmäßig aus einem Rotor mit Turbinenrad, Verdichterrad, sowie einer diese Bauteile miteinander verbindenden Welle, einer Lagerung, und feststehenden Gehäuseteilen, wie Turbinen-, Lager- und Verdichtergehäuse, zusammen. Turbinen- und Verdichtergehäuse nehmen jeweils das Turbinenrad bzw. das Verdichterrad auf und sind mit einem Massenstrom belastbar. Das Lagergehäuse grenzt einerseits an das Turbinengehäuse und andererseits an das Verdichtergehäuse, und nimmt die Welle, sowie die zugehörige Lagerung der Welle auf. Die turbinenseitig sowie verdichterseitig herrschenden zumeist hohen Prozessdrücke übersteigen den innerhalb des Lagergehäuses typischerweise vorliegenden Atmosphärendruck. Um das Innenplenum des Lagergehäuses gegenüber einem Massenstrom von Turbinen- bzw. Verdichterseite her abzudichten, werden deshalb entsprechende Dichtvorrichtungen in den Bereichen des Lagergehäuses eingesetzt, in denen die Welle durch die Lagergehäusewandungen hindurch in das Verdichter- bzw. Turbinengehäuse geführt ist.

Zur Schmierung der Lager innerhalb des Lagergehäuses wird Schmieröl verwendet, dem darüber hinaus auch eine Kühlfunktion gegenüber den typischerweise hohen turbinenseitigen Betriebstemperaturen zukommen kann. Die Dichtvorrichtungen dienen damit auch dazu, einen Austritt von Schmieröl in das Verdichtergehäuse oder das Turbinengehäuse zu verhindern.

Die bei Abgasturboladern zum Einsatz kommenden Dichtungen umfassen innerhalb des Lagergehäuses angeordnete Ölfangkammersysteme sowie Kolbenringe, und dienen der Abdichtung der aus dem Lagergehäuse herausgeführten Wellenpartie gegenüber dem Lagergehäuseinneren. Diese Wellendichtsysteme verfügen typischerweise zusätzlich über ein Sperrluftsystem zur Kühlung sowie zur Sperrung gegen turbinenseitige Abgase und damit zur Verhinderung von Schmutzbildung innerhalb des Lagergehäuses. Weiterhin können zu Kühlzwecken Ölspritzbohrungen im Bereich der Wellendichtsysteme angebracht sein.

### Stand der Technik

Die Lagerung eines Abgasturboladers weist standardmäßig zwei Radiallager und ein Axiallager auf. Jedem dieser Lager wird durch entsprechende Ölzufuhrleitungen Schmieröl zugeführt, welches daraufhin durch das jeweilige Lager in den Lagerraum, d.h. den gesamten Innenraum des Lagergehäuses, gefördert wird. Die Mengen des jeweils geförderten Schmieröls sowie die Geschwindigkeiten, mit denen das Schmieröl jeweils in den Lagerraum geschleudert wird, sind zum Teil erheblich. Dies hat eine Benetzung der gesamten Innenwände des Lagergehäuses mit Schmieröl zur Folge. Weiterhin kann von den Lagern gefördertes und in den Lagerraum geschleudertes Schmieröl auch an den Wandpartien des Lagergehäuses abprallen. Ein Teil dieses Schmieröls kann bei ungünstigem Abprall von den Lagergehäusewänden in den Bereich der Dichtpartien des Lagergehäuses reflektiert werden und dort zu Undichtheiten führen. Diese Problematik ist insbesondere relevant, wenn der zur Verfügung stehende Lagerraum innerhalb des Lagergehäuses klein ist. Je kleiner der Abstand zwischen den Wänden und den Dichtpartien ist, desto wahrscheinlich ist eine Reflektion von Schmieröl in den Bereich der Wellendichtung. Entsprechend sind die Anforderungen an die Wellendichtungen umso größer, je kleiner der Lagerraum ist.

Insbesondere relevant im Hinblick auf Undichtigkeiten der Wellendichtpartien ist der jeweilige Bereich des Ölablaufs der Wellendichtsysteme. Gegenüber den relativ kleinen Eintrittsspalten für Schmieröl in das Innere des Lagergehäuses sind die Flächen, an denen das Schmieröl abläuft groß. Durch ungünstige Reflektionen von Schmieröl an diesen großen Ablaufflächen kann Schmieröl in den Bereich der Dichtpartie geschleudert werden, so dass es zu Undichtigkeiten kommen kann.

In EP 2 192 272 ist eine Vorrichtung zum Abdichten des Lagergehäuses eines Abgasturboladers gegenüber dem angrenzenden Verdichtergehäuse, in welches von der Lagerseite her die Welle des Abgasturboladers geführt ist, beschrieben. Die Vorrichtung umfasst eine feststehende Zwischenwand mit einem axial erstreckten und ringförmig um die Welle geführten Wandansatz. Durch diesen Wandansatz wird ein Radrückraum des Verdichterrades von einem innerhalb des Lagergehäuses angeordneten Ölraum getrennt. In diesen Ölraum hinein ragt eine an der Welle befestigte Dichtscheibe, wobei zwischen der Dichtscheibe und der der Dichtscheibe zugewandten Stirnfläche des Wandansatzes ein Trennspalt angeordnet ist. Zwischen der Welle und der Zwischenwand sind Dichtungen, beispielsweise Kolbenringe oder Labyrinthdichtungen, vorgesehen, durch welche ein Austritt von Schmieröl aus dem Lagergehäuse oder ein Eindringen eines Luft- Massenstromes von der Verdichterseite weiterhin unterbunden werden soll. Desweiteren umfasst die Vorrichtung eine mit einer Ölfangrinne verbundene Abtropfvorrichtung, welche in der Ölfangrinne gesammeltes Schmieröl mittels der Schwerkraft in einen Ölablauf leitet. Die Abtropfvorrichtung weist eine Ablauffläche für Schmieröl auf und ist im bezüglich der Schwerkraft unterhalb der Welle angeordneten Bereich des Ölraums und in einem großen axialen Abstand von der Dichtscheibe angeordnet. Schmieröl, welches in den Trennspalt gelangt, kann durch die Abtropfvorrichtung aufgrund ihres axialen Abstandes und ihrer Neigung relativ zur Dichtscheibe ohne Wechselwirkung mit der Dichtscheibe in einen Ölablauf geleitet werden. In den Dokumenten DE 197 13 415 A1, WO 2013/145078 A1 und WO 2014/014791 A1 werden weitere Beispiele von Abgasturboladern mit Vorrichtungen zum Abdichten des Lagergehäuses präsentiert.

Im Zusammenhang der Erfindung wird auf Öl innerhalb des Lagergehäuses Bezug genommen, das eine Schmierfunktion übernimmt. Darüber hinaus kann dieses Öl auch eine Kühlfunktion gegenüber hohen Prozesstemperaturen auf Turbinen- oder Verdichterseite zukommen. Werden vorstehend und im Folgenden die Begriffe Öl oder Ölstrom verwendet, so sind diese als gleichbedeutend zu Schmieröl oder Schmierölstrom zu verstehen.

### Kurze Darstellung der Erfindung

Der Erfindung liegt die Aufgabe zugrunde, eine Vorrichtung zum Abdichten eines Lagergehäuses gegenüber einem Verdichtergehäuse eines Abgasturboladers anzugeben, bei der die Dichtigkeit der verdichterseitigen Wellendichtung verbessert ist. Die Erfindung betrifft auch einen Abgasturbolader mit einer solchen Vorrichtung.

Bei der Vorrichtung gemäß der Erfindung, wie sie im Anspruch 1 definiert wird, ist in dem oben im Zusammenhang des Standes der Technik beschriebenen großen Ölraum, in welchen die auf der Welle befestigte Dichtscheibe hineinragt, zusätzlich eine in vornehmlich axialer Richtung erstreckte Abdeckung angeordnet. Gegenüber dem axial erstreckten Wandansatz der Zwischenwand ist die Abdeckung radial nach Außen versetzt und unterteilt den großen Ölraum zusammen mit der Dichtscheibe in eine innere Ölfangkammer und eine äußere Ölfangkammer. Zwischen der Dichtscheibe und der Abdeckung ist ein Trennspalt angeordnet, durch den die innere und die äußere Ölfangkammer voneinander getrennt sind. Die Abdeckung weist einen ersten vornehmlich axial erstreckten Abschnitt und einen zweiten vornehmlich axial erstreckten Abschnitt auf, wobei sich der erste vornehmlich axial erstreckte Abschnitt von der Zwischenwand in Richtung der Dichtscheibe in den großen Ölraum hinein erstreckt, wobei der zweite vornehmlich axial erstreckte Abschnitt einen größeren radialen Abstand von der Achse des Rotors aufweist als der erste vornehmlich axial erstreckte Abschnitt und den äußeren Rand der Dichtscheibe radial von außen abschirmt, wobei der erste und der zweite vornehmlich axial erstreckte Abschnitt durch einen vornehmlich radial erstrecken Abschnitt der Abdeckung miteinander verbunden sind, und wobei ein zweiter Trennspalt zwischen der Dichtscheibe und dem vornehmlich radial erstreckten Abschnitt sowie dem zweiten vornehmlich axial erstreckten Abschnitt der Abdeckung angeordnet ist. Durch diese Anordnung der Abdeckung wird erreicht, dass ein Großteil des von den Lagern in Richtung des großen Ölraumes geförderten Schmieröls in der äußeren Ölfangkammer abgefangen und in Richtung eines Ölablaufs des Lagergehäuses transportiert werden kann, ohne dass dieses Schmieröl in Richtung der Dichtpartie und insbesondere in den Trennspalt zwischen Wandansatz und Dichtscheibe gelangen kann. Damit wird insbesondere auch verhindert, dass eine zu große Menge Öls in den Bereich der Kolbenringe und von dort aus in den Verdichterkanal gelangen kann.

Um in die innere Ölfangkammer eingetretenes Öl abzuführen, ist in der Abdeckung im bezüglich der Schwerkraft unterhalb der Welle befindlichen Sektor eine Öffnung angeordnet. Die dem Ölabfluß aus der inneren Ölfangkammer dienende Öffnung kann gegenüber dem, bezüglich der Schwerkraft, "tiefsten Punkt" der Abdeckung bzw. der durch die Abdeckung umschlossenen inneren Ölfangkammer, entgegen der Drehrichtung des Rotors versetzt angeordnet sein. Das heißt, die Öffnung kann sich in der senkrecht zur Drehachse der Welle befindlichen Ebene in einem von der Vertikalen aus in Drehrichtung des Rotors gemessenen Winkelbereich von 90° bis 180° erstrecken. Unter dem "tiefsten Punkt" der Abdeckung ist dabei derjenige Punkt der Abdeckung zu verstehen, der von der Vertikalen aus gemessen bei einem Winkel von 180° angeordnet ist. Mit anderen Worten kann die Öffnung der Abdeckung 6 in einer durch Vertikale und Waagerechte aufgespannten Ebene senkrecht zur vom Lagergehäuse zum Verdichtergehäuse erstreckten Achse (A) des Rotors (2) von der Vertikalen aus in Drehrichtung des Rotors gemessen in einem Bereich von 90° bis 180° angeordnet sein. Bei einer solchen Anordnung der Öffnung wird die Dichtpartie vorteilhaft gegen solches Schmieröl abgeschirmt, das im unterhalb des Rotors befindlichen Bereich der äußeren Ölfangkammer von den Wänden in Richtung des Rotors reflektiert wird.

Weitere Vorteile der Erfindung ergeben sich aus den abhängigen Ansprüchen.

### Kurze Beschreibung der Zeichnungen

Anhand von Figuren ist nachfolgend ein Ausführungsbeispiel einer Vorrichtung zum Abdichten eines Schmieröl aufnehmenden Lagergehäuses nach der Erfindung dargestellt und näher erläutert. In den Figuren sind Elemente mit gleicher Wirkung mit gleichen Bezugszeichen versehen. Es zeigt
- Fig.1: eine schematische Schnittdarstellung der verdichterseitigen Dichtpartie mit einer Abdeckung nach der Erfindung,
- Fig. 2A: einen Teilbereich der Dichtpartie nach Fig. 1 mit einer Abdeckung, welche einen Abschnitt in Form eines hohlen Kegelstumpfes aufweist,
- Fig. 2B: einen Teilbereich der Dichtpartie nach Fig. 1 mit einer Abdeckung, welche einen Abschnitt in Form eines schiefen Hohlzylinders aufweist,
- Fig. 2C: einen Teilbereich der Dichtpartie nach Fig. 1 mit einer Abdeckung, welche einen Abschnitt in Form eines hohlen Zylinders aufweist, wobei die Wanddicke dieses Abschnitts sich in axialer Richtung von der Dichtscheibe in Richtung der Zwischenwand zum Verdichtergehäuse hin verjüngt,
- Fig. 3A: eine schematische Darstellung von Abdeckung und Dichtscheibe in demjenigen Bereich, in dem diese Bauteile aneinander angrenzen,
- Fig. 3B: eine weitere schematische Darstellung einer möglichen Anordnung von Abdeckung und Dichtscheibe in demjenigen Bereich, in dem diese Bauteile aneinander angrenzen,
- Fig. 3C: eine Weiterentwicklung der Anordnung der Bauteile nach Fig. 3B, und
- Fig. 4: eine schematische isometrische Schnittdarstellung der Abdeckung mit Ablauf für innerhalb der inneren Ölfangkammer gesammeltes Schmieröl.

### Weg zur Ausführung der Erfindung

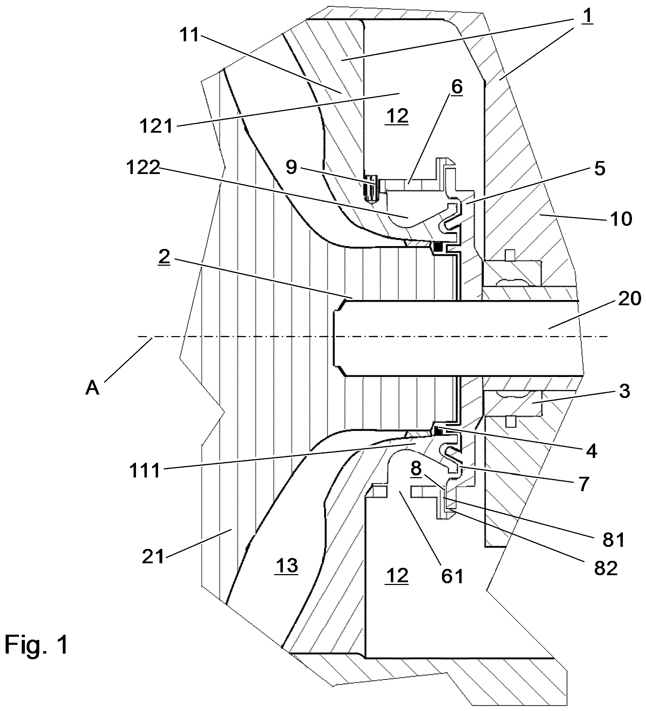

Fig. 1 zeigt eine schematische Schnittdarstellung desjenigen Bereichs eines Abgasturboladers, in dem das Lagergehäuse und eine Zwischenwand aneinander angrenzen und in dem innerhalb des Lagergehäuses eine Wellendichtung mit den oben beschriebenen Merkmalen nach der Erfindung angeordnet ist. Dargestellt sind feststehende Komponenten des Gehäuses 1 des Turboladers sowie ein Teil des Rotors 2 mit der vom Lagergehäuse 10 in Richtung des Verdichtergehäuses geführten Welle 20, sowie dem Verdichterrad 21. Im Inneren des Lagergehäuses 10 sind zur Lagerung der Welle 20 entsprechende Lager 3 angeordnet, die mittels (nicht dargestellter) Ölzufuhrleitungen mit Schmieröl versorgt werden. Bei dem in der Fig. 1 beispielhaft dargestellten Lager 3 handelt es sich insbesondere um ein Radiallager. Die spezifische Anordnung der Lager entlang der Welle des Turboladers ist für den Gegenstand der Erfindung jedoch nicht relevant. Durch die Lager gefördertes Schmieröl wird mit zum Teil hohen Geschwindigkeiten in den Innenraum des Lagergehäuses geschleudert und gelangt damit auch in den großen Ölraum 12. Letzterer wird in seiner axialen Erstreckung auf der einen Seite durch eine Zwischenwand 11 begrenzt, welche den großen Ölraum 12 von einem Radrückraum 13 des Verdichterrades 21 trennt.

In den großen Ölraum 12 hinein ragt eine auf der Welle 20 befestigte Dichtscheibe 5. Die Dichtscheibe 5 ist Teil eines Systems zur Wellendichtung, durch welches verhindert werden soll, dass von den Lagern gefördertes Schmieröl vom Lagerinnenraum in Richtung des Verdichters gelangen kann. Die Zwischenwand 11 weist einen axial erstreckten und ringförmig um den Rotor 2 geführten Wandansatz 111 auf. Zwischen der dem Lagergehäuseinneren zugewandten Stirnseite des Wandansatzes 111 und der Dichtscheibe 5 ist ein erster Trennspalt 7 angeordnet. Durch diesen Trennspalt ist der große Ölraum 12 von der zwischen Rotor und Zwischenwand befindlichen Dichtung 4 getrennt. Die Dichtung 4 gehört, wie auch die Dichtscheibe 5, zur Wellendichtung und kann beispielsweise in Form eines oder mehrerer Kolbenringe ausgeführt sein.

In dem großen Ölraum 12 ist eine vornehmlich axial erstreckte Abdeckung 6 nach der Erfindung angeordnet, die in ihrer vornehmlich axialen Erstreckung einerseits durch die Zwischenwand 11 begrenzt ist und andererseits in axialer Richtung bis zum Sitz der Dichtscheibe 5 geführt ist. Zwischen der Dichtscheibe 5 und der Abdeckung 6 ist ein zweiter Trennspalt 8 angeordnet. Zusammen mit der Dichtscheibe 5 unterteilt die Abdeckung 6 den großen Ölraum 12 damit in eine äußere Ölfangkammer 121 und eine innere Ölfangkammer 122. Der zweite Trennspalt 8 trennt die äußere Ölfangkammer 121 insbesondere von der inneren Ölfangkammer 122.

Durch die Lager 3 in die äußere Ölfangkammer 121 geschleudertes Schmieröl prallt an den Wänden der äußeren Ölfangkammer 121 ab. Der Großteil dieses Schmieröls wird durch die Abdeckung 6 daran gehindert, in die innere Ölfangkammer 122 zu gelangen. Durch den zweiten Trennspalt 8 gelangt jedoch, insbesondere im bezüglich der Schwerkraft oberhalb des Rotors 2 befindlichen Bereich, ein kleiner Teil des Schmieröls von der äußeren Ölfangkammer 121 in die innere Ölfangkammer 122. Die innere Ölfangkammer 122 wird in ihrer Ausdehnung jeweils durch die Zwischenwand 11, den Wandansatz 111 der Zwischenwand, die Dichtscheibe 5, sowie die Abdeckung 6 begrenzt. Der von der Zwischenwand 11 abgewandte Teil des Wandansatzes 111 und die Dichtscheibe 5 können derart angeordnet sein, dass in den zweiten Trennspalt 8 gelangtes Schmieröl zunächst in die innere Ölfangkammer 122 gelangt, anstatt direkt weiter in Richtung des ersten Trennspalts 7 zu fließen. Dieses Öl wird mittels der Schwerkraft innerhalb der inneren Ölfangkammer 122 in den bezüglich der Schwerkraft unterhalb des Rotors 2 befindlichen Bereich der inneren Ölfangkammer 122 geleitet. In diesem Bereich ist ein Ablauf 61 angeordnet, durch den das Öl in den unterhalb des Rotors 2 befindlichen Teil der äußeren Ölfangkammer 121, und von dort aus mittels der Schwerkraft in einen Ölablauf des Lagergehäuses geführt werden kann. Wie auch im Folgenden näher beschrieben, können die Wandpartien der Abdeckung 6, welche der inneren Ölfangkammer zugewandt sind, zumindest im bezüglich der Schwerkraft unterhalb des Rotors befindlichen Bereich kegelig, mit einer Neigung in Richtung des Ablaufs 61, ausgeführt sein, um das Öl in Richtung des Ablaufs 61 zu lenken. Vom Ölablauf des Lagergehäuses kann das Öl durch einen entsprechenden Schmierölkreislauf schließlich wieder den Lagern 3 zugeführt zu werden.

Der Ablauf 61 kann die Form einer Öffnung der Abdeckung 6 aufweisen, welche in einem Teil des bezüglich der Schwerkraft unterhalb des Rotors 2 befindlichen Bereichs der Abdeckung angeordnet ist. Weiterhin ist der Ablauf 61 der inneren Ölfangkammer 122 vorteilhafterweise in einem großen axialen Abstand zur Dichtscheibe 5 angeordnet. Durch eine solche Anordnung kann verhindert werden, dass das aus der inneren Ölfangkammer 122 durch den Ablauf 61 abzuführende Öl auf die Dichtscheibe 5 trifft und damit in den ersten Trennspalt 7 und weiter in Richtung der Dichtung 4 gelangen kann.

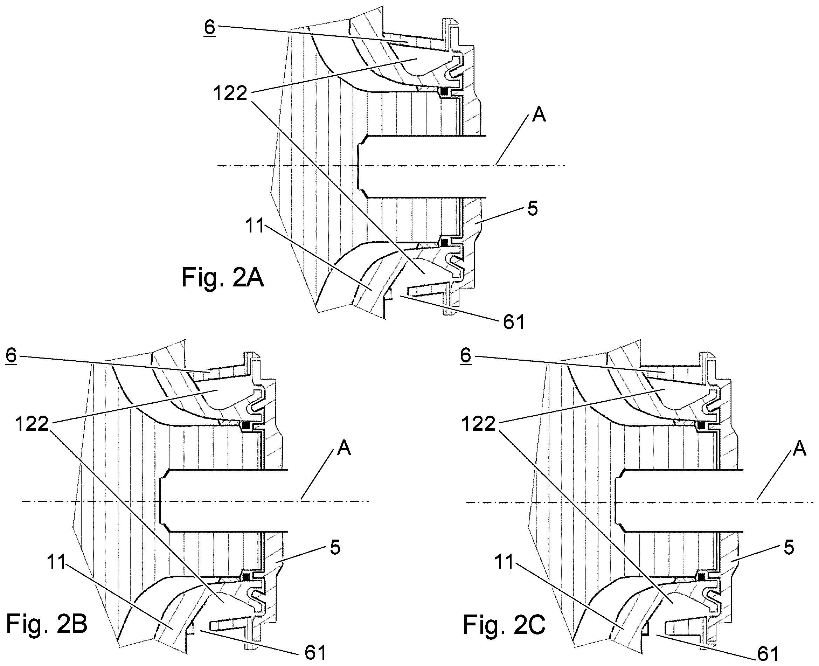

Zur Vermeidung einer Benetzung der Dichtscheibe 5 mit Öl aus der inneren Ölfangkammer 122 im Bereich des Ablaufs 61, kann zumindest ein an die Zwischenwand angrenzender Abschnitt der Abdeckung 6 die Form eines hohlen Kegelstumpfes aufweisen. Ein Beispiel dazu zeigt Fig. 2A, in welcher ein Teilbereich der Dichtpartie nach Fig. 1 dargestellt ist. Die Achse des hohlen Kegelstumpfes, durch den in Fig. 2A ein Abschnitt der Abdeckung 6 gegeben ist, fällt in diesem Fall mit der Achse A des Rotors zusammen. Der größte Durchmesser des hohlen Kegelstumpfes ist zweckmäßigerweise an dem der Zwischenwand 11 zugewandten Ende der Abdeckung 6 angeordnet. Auf diese Weise kann in der inneren Ölfangkammer 122 gesammeltes Schmieröl im unterhalb des Rotors 2 befindlichen Bereich der inneren Ölfangkammer 122 mittels der Schwerkraft an den konischen Wänden der inneren Ölfangkammer 122 von der Dichtscheibe 5 weg in Richtung des Ablaufs 61 geleitet werden. Zweckmäßigerweise ist der Ablauf 61 in diesem Fall in einem solchen Bereich der Abdeckung 6 unterhalb des Rotors angeordnet, der direkt an die Zwischenwand 11 angrenzt.

Bei einer weiteren Ausführungsform kann, wie beispielhaft der Fig. 2B zu entnehmen, zumindest ein an die Zwischenwand 11 angrenzender Abschnitt der vornehmlich axial erstreckten Abdeckung 6 die Form eines schiefen Hohlzylinders aufweisen. In diesem Fall ist die Achse des schiefen Hohlzylinders gegenüber der Achse A des Rotors 2 in Richtung der Vertikalen von der Zwischenwand 11 in Richtung des Lagergehäuses 10 aus gesehen nach oben geneigt. Durch diese Form kann wiederum innerhalb der inneren Ölfangkammer 122 gesammeltes Schmieröl im unteren Bereich der inneren Ölfangkammer 122 entlang ihrer Wände von der Dichtscheibe 5 weg in Richtung des Ablaufs 61 transportiert werden.

Eine weitere, in Fig. 2C dargestellte, Möglichkeit für die Form zumindest des an die Zwischenwand 11 angrenzenden Teils der Abdeckung 6 ist durch einen hohlen Zylinder gegeben, dessen Achse entlang der Achse A des Rotors 2 verläuft. Die Dicke der Wände des hohlen Zylinders kann dabei in axialer Richtung zur Zwischenwand 11 hin abnehmen. Dadurch kann im unterhalb des Rotors befindlichen Bereich der inneren Ölfangkammer 122 wiederum eine zur Zwischenwand 11 hin geneigte Fläche geschaffen werden. Entlang dieser Fläche kann Schmieröl in Richtung des, axial von der Dichtscheibe 5 weg zur Zwischenwand 11 hin versetzten, Ablaufs 61 fließen.

In allen zuvor sowie im Folgenden beschriebenen Fällen kann die Abdeckung 6 auf die Zwischenwand 11 aufgepresst, aufgeschraubt oder geschweißt sein. Auch kann beispielsweise ein Schwerspannstift zur Ausrichtung der Abdeckung 6 genutzt werden. Ein Beispiel für die Ausrichtung der Abdeckung 6 durch einen Schwerspannstift 9 ist insbesondere der Fig. 1 zu entnehmen. Unabhängig von der konkreten, oben und im Folgenden beschriebenen Form der Abdeckung 6, d.h. beispielsweise unabhängig davon, ob zumindest ein Teil der Abdeckung die Form eines, oben im Zusammenhang der Fig. 2A, 2B und 2C beschriebenen, hohlen Kegelstumpfes, hohlen Zylinders oder hohlen schiefen Zylinders annimmt, kann der Schnitt durch die Abdeckung 6 in einer Ebene senkrecht zur Achse A des Rotors 2 jeweils die Form zumindest eines Teilrings oder eines vollen Ringes annehmen.

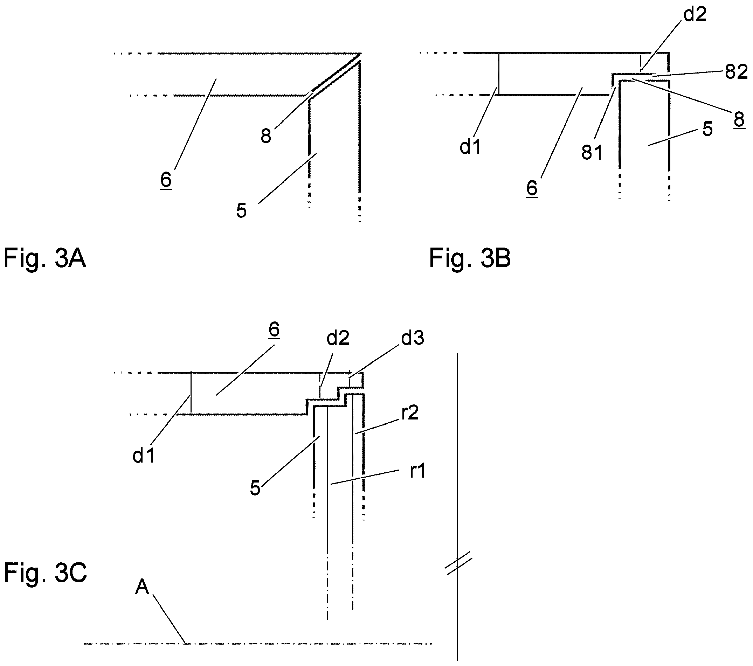

Nach Möglichkeit soll verhindert werden, dass Öl im bezüglich der Schwerkraft oberhalb der Achse A des Rotors befindlichen Bereich von den Wänden der äußeren Ölfangkammer 121 oder direkt von den Lagern kommend, direkt in den Bereich der Dichtpartie gelangen kann. Um die Wellendichtung in dieser Hinsicht weiter zu verbessern, können die Dichtscheibe 5 und die Abdeckung 6 in dem einander zugewandten Bereich jeweils eine der im Folgenden mit Bezug auf die Figur 1, sowie anschließend mit Bezug auf die Figuren 3A, 3B und 3C beschriebenen Formen aufweisen.

Die Abdeckung 6 weist einen ersten axial erstreckten Abschnitt und einen zweiten axial erstreckten Abschnitt auf. Dabei erstreckt sich der erste axial erstreckte Abschnitt von der Zwischenwand 11 in Richtung der Dichtscheibe 5 in den großen Ölraum 12 hinein. Demgegenüber weist der zweite axial erstreckte Abschnitt einen größeren radialen Abstand von der Achse A der Welle 11 auf und schirmt den äußeren Rand der Dichtscheibe 5 radial von aussen ab. Unter dem äußeren Rand der Dichtscheibe 5 kann dabei auch die Mantelfläche der Dichtscheibe 5 verstanden werden. Eine Verbindung zwischen dem der Zwischenwand 11 abgewandten Ende des ersten axial erstreckten Abschnitts und dem zweiten axial erstreckten Abschnitt ist durch einen radial entlang der Dichtscheibe 5 erstrecken Abschnitt der Abdeckung 6 gegeben. Zwischen der Dichtscheibe 5 und den der Dichtscheibe benachbarten Teilen der Abdeckung 6 ist dabei der zweite Trennspalt 8 angeordnet. Im Fall der vorbeschriebenen Form der Abdeckung 6 besitzt dieser zweite Trennspalt 8 einen radial erstreckten Teil 81 sowie einen axial erstreckten Teil 82. Durch den zweiten axial erstreckten Teil der Abdeckung 6 wird der axial erstreckte Teil 82 des zweiten Trennspalts insbesondere radial von der äußeren Ölfangkammer 121 abgeschirmt. Der zweite axial erstreckte Abschnitt der Abdeckung 6 kann dabei beispielsweise die Form eines den axial erstreckten Teil 82 des Trennspalts 8 radial nach außen abschirmenden Dachs oder Schnabels aufweisen. Auch kann die Fase an dem der Zwischenwand 11 abgewandten Ende der Abdeckung 6 so ausgeprägt sein, dass in diesem Bereich auftreffendes Öl in günstiger Weise weg von dem zweiten Dichtspalt 8 und somit weg von den Dichtpartien gelenkt wird. Die vorbeschriebene Form der Abdeckung 6 ist insbesondere in der Fig. 1 dargestellt.

Weitere Möglichkeiten der Ausgestaltung von Dichtscheibe 5 und Abdeckung 6 in dem Bereich, an dem diese Bauteile einander zugewandt sind, sind den Figuren 3A, 3B und 3C zu entnehmen. Die Form der Abdeckung 6 ist jeweils so gewählt, dass die Dichtscheibe 5 durch einen entsprechenden axial erstreckten Abschnitt der Abdeckung 6 radial nach außen abschirmt wird.

In Fig. 3A ist diese Abschirmung dadurch realisiert, dass der entsprechende axial erstreckte Abschnitt der Abdeckung 6 eine Keilform aufweist, auf die der korrespondierende radial verlaufende Abschnitt der Dichtscheibe 5 ebenfalls keilförmig angepasst ist.

Fig. 3B zeigt eine weitere Möglichkeit der radialen Abschirmung der Dichtscheibe 5 durch einen entsprechenden Abschnitt der Abdeckung 6. Die Abdeckung 6 ist im dargestellten Bereich axial erstreckt. Die in radialer Richtung gemessene Dicke der Abdeckung 6 nimmt zunächst einen Wert d1 an. In dem Bereich, in dem die Abdeckung 6 in axialer Richtung auf die in radialer Richtung erstreckte Dichtscheibe 5 trifft verkleinert sich die Dicke der Abdeckung 6 sprunghaft auf eine Dicke d2. Dies geschieht derart, dass die Dichtscheibe 5 in radialer Richtung von dem Abschnitt der Abdeckung 6 mit der zweiten Dicke d2 abgeschirmt wird. Dadurch resultiert ein axial erstreckter Teil 82 des zweiten Trennspalts 8. Ein radial erstreckter Teil 81 des zweiten Trennspalts 8 ist zwischen der Dichtscheibe 5 und demjenigen Bereich der Abdeckung 6 angeordnet, an dem sich die Dicke der Abdeckung 6 sprunghaft von d1 auf d2 ändert.

In Fig. 3C ist eine Weiterbildung der in Fig. 3B dargestellten radialen Abschirmung der Dichtscheibe 5 durch die Abdeckung 6 gezeigt. Die in radialer Richtung gemessene Dicke der Abdeckung 6 verkleinert sich aus Richtung der Zwischenwand 11 gesehen in diesem Fall in zwei Schritten, von einer Dicke d1 über eine Dicke d2 auf eine Dicke d3. Die Dichtscheibe 5 passt sich im entsprechenden Bereich dem Verlauf der Abdeckung 6 an, indem sich der von der Achse A des Rotors aus gemessene Radius der Dichtscheibe 5 von einem ersten kleineren Wert r1 in axialer Richtung von der Zwischenwand aus gesehen sprunghaft zu einem zweiten größeren Wert r2 ändert. Dabei ist derjenige Teil der Mantelfläche der Dichtscheibe 5, der einen radialen Abstand r1 von der Achse A des Rotors aufweist, radial nach außen durch den axial erstreckten Bereich der Abdeckung 6 mit Dicke d2 abgeschirmt. Analog ist derjenige Teil der Mantelfläche der Dichtscheibe 5, der einen radialen Abstand r2 von der Achse A des Rotors aufweist, radial nach außen durch den axial erstreckten Bereich der Abdeckung 6 mit Dicke d3 abgeschirmt. Der zweite Trennspalt 8 zwischen Abdeckung 6 und Dichtscheibe 5 besitzt damit im Fall einer Konfiguration nach Fig. 3C zwei radial erstreckte Abschnitte und zwei axial erstreckte Abschnitte.

Durch die Fliehkräfte bei Rotation der am Rotor befestigten Dichtscheibe 5 kann Schmieröl im radial erstreckten Bereich des zweiten Trennspaltes 8 radial nach außen befördert werden. Um diesen erwünschten Transport von Öl von der inneren Ölfangkammer 122 in Richtung der äußeren Ölfangkammer 121 zu unterstützen, kann die Dichtscheibe 5 eine entsprechende glatte, d.h. unter Umständen geglättete oder beschichtete, Oberfläche aufweisen. Allgemein sollte die Fläche der Dichtscheibe nicht zu rau gewählt sein, da ansonsten ein großer Reibungsverlust durch im zweiten Trennspalt 8 befindliche Luft stattfinden kann. Weiterhin kann es vorteilhaft sein, wenn der an die innere Ölfangkammer 122 angrenzende Bereich des Trennspaltes 8 eine radiale Erstreckungskomponente besitzt. Durch eine solche radiale Erstreckungskomponente kann in dem zugehörigen Bereich des Trennspaltes 8 bei Rotation der Dichtscheibe eine Sogwirkung entstehen, durch die Schmieröl in radialer Richtung nach außen befördert wird.

Im Falle der in den Figuren 3B und 3C dargestellten möglichen Formen der Abdeckung 6 in dem Bereich, in dem die Dichtscheibe 5 und die Abdeckung 6 einander zugewandt sind, kann die Abdeckung weiterhin eine in den Figuren 3B und 3C nicht dargestellte, der äußeren Ölfangkammer 121 zugewandte Fase aufweisen. Diese Fase kann wiederum so ausgeprägt sein, dass im Bereich der Fase auftreffendes Öl in vorteilhafter Weise weg von dem zweiten Dichtspalt 8 und damit weg von den Dichtpartien gelenkt wird. Dabei kann die Fase eine ähnliche Form annehmen, wie die entsprechende in den Fig. 1, 2A, 2B und 2C dargestellte Fase.

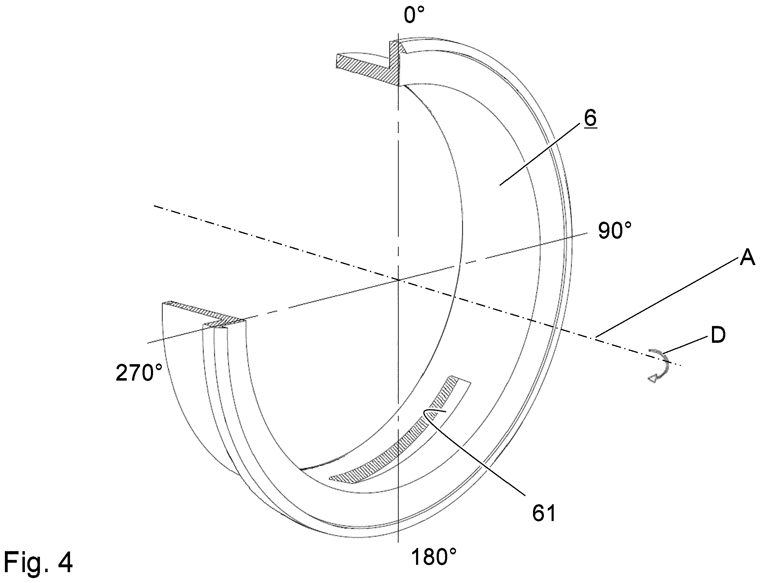

In Fig. 4 ist ein schematisches isometrisches Schnittbild der Abdeckung 6, von der Lagergehäuseseite aus gesehen, gezeigt. Die Form der dargestellten Abdeckung 6 entspricht dabei derjenigen, die in der Fig. 1 im Schnitt dargestellt ist. Im bezüglich der Schwerkraft unterhalb der Achse A des Rotors befindlichen Sektor der Abdeckung 6 befindet sich ein Ablauf 61 in Form einer Öffnung der Abdeckung. Diese Öffnung erstreckt sich in einer Ebene senkrecht zur Achse A des Rotors von der Vertikalen aus in der Drehrichtung D des Rotors gemessen in einem Bereich von 90° bis 180°. D.h. die Öffnung ist gegenüber dem, bezüglich der Schwerkraft, tiefsten Punkt der Abdeckung entgegen der Drehrichtung D des Rotors versetzt angeordnet. Die Öffnung der Abdeckung 6 ist für diesen Fall so angeordnet, dass vom Rotor tangential in das Innere des Lagergehäuses geschleudertes und an den Wänden abprallendes Öl nicht durch die Öffnung des Ablaufs 61 in die innere Ölfangkammer reflektiert werden kann.

Bei Verwendung der Begriffe "oberhalb" und "tiefster Punkt" wird vorliegend stets auf ein Bezugssystem zurückgegriffen, in dem der Turbolader auf einer horizontalen Fläche steht und die Achse des Rotors des Turboladers damit waagerecht verläuft. Die Angaben "oberhalb" und "tiefster Punkt" sind in diesem Zusammenhang bezüglich der Vertikalen, d.h. der durch die Schwerkraft gegebenen Richtung, zu verstehen. Die tatsächliche Ausrichtung des Turboladers bei Einbau kann von der vorbeschriebenen horizontalen Ausrichtung abweichen.

### Bezugszeichenliste

- A: Drehachse
- D: Drehrichtung des Rotors
- 1: Gehäuse
- 10: Lagergehäuse
- 11: Zwischenwand
- 12: großer Ölraum
- 13: Radrückraum
- 111: Wandansatz
- 121: äußere Ölfangkammer
- 122: innere Ölfangkammer
- 2: Rotor
- 20: Welle
- 21: Verdichterrad
- 3: Lager
- 4: Dichtung
- 5: Dichtscheibe
- 6: Abdeckung
- 61: Ablauf der inneren Ölfangkammer
- 7: erster Trennspalt
- 8: zweiter Trennspalt
- 81: radial erstreckter Teil des zweiten Trennspalts
- 82: axial erstreckter Teil des zweiten Trennspalts
- 9: Schwerspannstift
- d1: erste Dicke der Abdeckung
- d2: zweite Dicke der Abdeckung
- d3: dritte Dicke der Abdeckung
- r1: erster, kleinerer Radius der Dichtscheibe
- r2: zweiter, größerer Radius der Dichtscheibe

## Patentansprüche

1. Vorrichtung zum Abdichten eines Schmieröl aufnehmenden Lagergehäuses (10) eines Abgasturboladers mit einem Rotor (2), der durch das Lagergehäuse hindurch in ein angrenzendes, mit einem Massenstrom belastbares Verdichtergehäuse geführt ist, umfassend
eine Zwischenwand (11), die einen vom Lagergehäuse umschlossenen großen Ölraum (12) und einen Radrückraum (13) des Verdichtergehäuses voneinander trennt und einen axial erstreckten und ringförmig um den Rotor geführten Wandansatz (111) aufweist,
eine ringförmige Dichtscheibe (5), die auf einer Welle (20) des Rotors (2) befestigt ist und in den großen Ölraum (12) ragt,
einen zwischen der Dichtscheibe (5) und dem Wandansatz (111) angeordneten ersten Trennspalt (7),
eine zwischen Rotor (2) und Zwischenwand (11) angeordnete Dichtung (4), wobei eine vornehmlich axial erstreckte Abdeckung (6) in dem großen Ölraum (12) angeordnet ist, wobei die Abdeckung gegenüber dem axial erstreckten Wandansatz (111) radial nach Außen versetzt ist und den großen Ölraum (12) zusammen mit der Dichtscheibe (5) in eine innere Ölfangkammer (122) und eine äußere Ölfangkammer (121) unterteilt, **dadurch gekennzeichnet, dass** die Abdeckung (6) einen ersten vornehmlich axial erstreckten Abschnitt und einen zweiten vornehmlich axial erstreckten Abschnitt aufweist, wobei sich der erste vornehmlich axial erstreckte Abschnitt von der Zwischenwand (11) in Richtung der Dichtscheibe (5) in den großen Ölraum (12) hinein erstreckt, wobei der zweite vornehmlich axial erstreckte Abschnitt einen größeren radialen Abstand von der Achse (A) des Rotors (20) aufweist als der erste vornehmlich axial erstreckte Abschnitt und den äußeren Rand der Dichtscheibe (5) radial von aussen abschirmt, wobei der erste und der zweite vornehmlich axial erstreckte Abschnitt durch einen vornehmlich radial erstrecken Abschnitt der Abdeckung (6) miteinander verbunden sind, und wobei ein zweiter Trennspalt (8) zwischen der Dichtscheibe (5) und dem vornehmlich radial erstreckten Abschnitt sowie dem zweiten vornehmlich axial erstreckten Abschnitt der Abdeckung (6) angeordnet ist.

2. Vorrichtung nach Anspruch 1, **dadurch gekennzeichnet, dass** die Abdeckung (6) im bezüglich einer waagerechten Ausrichtung der Achse (A) des Rotors (2) unterhalb des Rotors befindlichen Sektor einen Ablauf (61) aufweist, wobei der Ablauf in Form einer Öffnung der Abdeckung ausgebildet ist und zur Abführung von innerhalb der inneren Ölfangkammer (122) gesammeltem Schmieröl dient.

3. Vorrichtung nach Anspruch 2, **dadurch gekennzeichnet, dass** der Ablauf (61) der inneren Ölfangkammer (122) gegenüber dem bezüglich der Schwerkraft tiefsten Punkt der inneren Ölfangkammer (122) entgegen der Drehrichtung des Rotors (2) versetzt angeordnet ist.

4. Vorrichtung nach Anspruch 1, **dadurch gekennzeichnet, dass** die Abdeckung (6) auf die Zwischenwand (11) aufgepresst, und/oder durch einen Schwerspannstift (9) ausgerichtet und und/oder zumindest teilringförmig um den Rotor (2) geführt ist.

5. Vorrichtung nach Anspruch 2, **dadurch gekennzeichnet, dass** ein an die Zwischenwand (11) angrenzender Abschnitt der vornehmlich axial erstreckten Abdeckung (6) die Form eines hohlen Kegelstumpfes aufweist, wobei die Achse des hohlen Kegelstumpfes mit der Achse (A) des Rotors (2) zusammenfällt, wobei sich der größte Durchmesser des hohlen Kegelstumpfes am der Zwischenwand (11) zugewandten Ende der Abdeckung befindet, und wobei der Ablauf (61) für in der inneren Ölfangkammer gesammeltes Schmieröl axial versetzt von der Dichtscheibe (5) in Richtung der Zwischenwand (11) angeordnet ist.

6. Vorrichtung nach Anspruch 2, **dadurch gekennzeichnet, dass** ein an die Zwischenwand (11) angrenzender Abschnitt der vornehmlich axial erstreckten Abdeckung (6) die Form eines schiefen Hohlzylinders aufweist, wobei die Achse des schiefen Hohlzylinders gegenüber der Achse (A) des Rotors (2) in Richtung der Vertikalen von der Zwischenwand (11) in Richtung des Lagergehäuses (10) aus gesehen nach oben geneigt ist.

7. Abgasturbolader mit einer Vorrichtung nach einem der Ansprüche 1 bis 7.

## Claims

1. Device for sealing a bearing housing (10), which accommodates lubricating oil, of an exhaust-gas turbocharger having a rotor (2) which is guided through the bearing housing into an adjoining compressor housing which can be charged with a mass flow, comprising
an intermediate wall (11) which separates a large oil space (12), surrounded by the bearing housing, and a wheel-rear-side chamber (13) of the compressor housing from one another and which has an axially extending wall projection (111) which is led annularly around the rotor,
an annular sealing disc (5) which is fastened to a shaft (20) of the rotor (2) and which protrudes into the large oil space (12),
a first parting gap (7) which is arranged between the sealing disc (5) and the wall projection (111), a seal (4) arranged between rotor (2) and intermediate wall (11),
wherein a predominantly axially extending cover (6) is arranged in the large oil space (12), wherein the cover is offset radially outwards in relation to the axially extending wall projection (111) and, together with the sealing disc (5), divides the large oil space (12) into an inner oil-collecting chamber (122) and an outer oil-collecting chamber (121), **characterized in that** the cover (6) has a first predominantly axially extending portion and a second predominantly axially extending portion, wherein the first predominantly axially extending portion extends from the intermediate wall (11) in the direction of the sealing disc (5) into the large oil space (12), wherein the second predominantly axially extending portion has a greater radial spacing to the axis (A) of the rotor (20) than the first predominantly axially extending portion and shields the outer edge of the sealing disc (5) radially from the outside, wherein the first and the second predominantly axially extending portion are connected to one another by a predominantly radially extending portion of the cover (6), and wherein a second parting gap (8) is arranged between the sealing disc (5) and the predominantly radially extending portion and the second predominantly axially extending portion of the cover (6).

2. Device according to Claim 1, **characterized in that** the cover (6) has an outlet (61) in the sector which is situated below the rotor with respect to a horizontal orientation of the axis (A) of the rotor (2), wherein the outlet is designed in the form of an opening of the cover and serves for discharging lubricating oil that has collected within the inner oil-collecting chamber (122).

3. Device according to Claim 2, **characterized in that** the outlet (61) of the inner oil-collecting chamber (122) is arranged offset, counter to the direction of rotation of the rotor (2), in relation to the lowest point, with respect to gravitational force, of the inner oil-collecting chamber (122).

4. Device according to Claim 1, **characterized in that** the cover (6) is pressed onto the intermediate wall (11), and/or is aligned by means of a heavy type dowel pin (9) and/or is led in at least partially annular fashion around the rotor (2).

5. Device according to Claim 2, **characterized in that** a portion, adjoining the intermediate wall (11), of the predominantly axially extending cover (6) has the shape of a hollow frustum, wherein the axis of the hollow frustum coincides with the axis (A) of the rotor (2), wherein the greatest diameter of the hollow frustum is situated at that end of the cover which faces towards the intermediate wall (11), and wherein the outlet (61) for lubricating oil that has collected in the inner oil-collecting chamber is arranged axially offset from the sealing disc (5) in the direction of the intermediate wall (11).

6. Device according to Claim 2, **characterized in that** a portion, adjoining the intermediate wall (11), of the predominantly axially extending cover (6) has the shape of an oblique hollow cylinder, wherein the axis of the oblique hollow cylinder is inclined upwards in relation to the axis (A) of the rotor (2) in the direction of the vertical as viewed from the intermediate wall (11) in the direction of the bearing housing (10).

7. Exhaust-gas turbocharger having a device according to any of Claims 1 to 7.

## Revendications

1. Dispositif pour l'étanchéité d'un logement de palier (10) recevant de l'huile de lubrification d'un turbocompresseur à gaz d'échappement comprenant un rotor (2) qui est guidé à travers le logement de palier dans un carter de compresseur adjacent pouvant être sollicité avec un débit massique, comprenant :
une paroi intermédiaire (11) qui sépare l'un de l'autre un gros espace d'huile (12) entouré par le logement de palier et un espace arrière de roue (13) du carter de compresseur et qui présente une partie de paroi (111) s'étendant axialement et guidée sous forme annulaire autour du rotor,
un disque d'étanchéité annulaire (5) qui est fixé sur un arbre (20) du rotor (2) et qui pénètre dans le gros espace d'huile (12),
un premier interstice de séparation (7) disposé entre le disque d'étanchéité (5) et la partie de paroi (111),
un joint d'étanchéité (4) disposé entre le rotor (2) et la paroi intermédiaire (11),
dans lequel un recouvrement (6) s'étendant essentiellement axialement est disposé dans le gros espace d'huile (12), le recouvrement étant décalé radialement vers l'extérieur par rapport à la partie de paroi s'étendant axialement (111) et divisant le gros espace d'huile (12) conjointement avec le disque d'étanchéité (5) en une chambre de collecte d'huile intérieure (122) et une chambre de collecte d'huile extérieure (121),
**caractérisé en ce que**
le recouvrement (6) présente une première portion s'étendant essentiellement axialement et une deuxième portion s'étendant essentiellement axialement, la première portion s'étendant essentiellement axialement s'étendant depuis la paroi intermédiaire (11) dans la direction du disque d'étanchéité (5) dans le gros espace d'huile (12),
la deuxième portion s'étendant essentiellement axialement présentant une plus grande distance radiale à l'axe (A) du rotor (20) que la première portion s'étendant essentiellement axialement et
protégeant radialement depuis l'extérieur le bord extérieur du disque d'étanchéité (5), la première et la deuxième portion s'étendant essentiellement axialement étant connectées l'une à l'autre par une portion s'étendant essentiellement radialement du recouvrement (6), et un deuxième interstice de séparation (8) étant disposé entre le disque d'étanchéité (5) et la portion s'étendant essentiellement radialement ainsi que la deuxième portion s'étendant essentiellement axialement du recouvrement (6).

2. Dispositif selon la revendication 1, **caractérisé en ce que** le recouvrement (6) présente une sortie (61) dans le secteur se trouvant en dessous du rotor, par rapport à une orientation horizontale de l'axe (A) du rotor (2), la sortie étant réalisée sous la forme d'une ouverture du recouvrement et servant à évacuer l'huile de lubrification accumulée à l'intérieur de la chambre de collecte d'huile intérieure (122).

3. Dispositif selon la revendication 2, **caractérisé en ce que** la sortie (61) de la chambre de collecte d'huile intérieure (122) est disposée de manière décalée dans le sens opposé au sens de rotation du rotor (2) par rapport au point le plus bas de la chambre de collecte d'huile intérieure (122), par rapport à la force de gravité.

4. Dispositif selon la revendication 1, **caractérisé en ce que** le recouvrement (6) est pressé sur la paroi intermédiaire (11), et/ou est orienté par une goupille fendue (9) et/ou est guidé au moins sous forme partiellement annulaire autour du rotor (2).

5. Dispositif selon la revendication 2, **caractérisé en ce qu'**une portion adjacente à la paroi intermédiaire (11) du recouvrement s'étendant essentiellement axialement (6) présente la forme d'un tronc de cône creux, l'axe du tronc de cône creux coïncidant avec l'axe (A) du rotor (2), le plus grand diamètre du tronc de cône creux se trouvant au niveau de l'extrémité du recouvrement tournée vers la paroi intermédiaire (11), et la sortie (61) pour l'huile de lubrification accumulée dans la chambre de collecte d'huile intérieure étant disposée de manière décalée axialement du disque d'étanchéité (5) dans la direction de la paroi intermédiaire (11) .

6. Dispositif selon la revendication 2, **caractérisé en ce qu'**une portion du recouvrement (6) s'étendant essentiellement axialement, adjacente à la paroi intermédiaire (11), présente la forme d'un cylindre creux oblique, l'axe du cylindre creux oblique étant incliné vers le haut par rapport à l'axe (A) du rotor (2), vu dans la direction de la verticale depuis la paroi intermédiaire (11) dans la direction du logement de palier (10).

7. Turbocompresseur à gaz d'échappement comprenant un dispositif selon l'une quelconque des revendications 1 à 7.
